# EUROPÄISCHE PATENTSCHRIFT

(11) **EP 0 322 567 B1**
(45) Veröffentlichungstag und Bekanntmachung des Hinweises auf die Patenterteilung: **30.10.1996**
(21) Anmeldenummer: 88119639.8
(22) Anmeldetag: 25.11.1988
(51) Int. Cl.: G06F 11/08

(54) **Vorrichtung und Verfahren zur Sicherung von Daten**
Device and method for the protection of data
Dispositif et procédé de protection de données

(30) Priorität: 24.12.1987 DE 3744200
(43) Veröffentlichungstag der Anmeldung: 05.07.1989
(73) Patentinhaber: Heidelberger Druckmaschinen Aktiengesellschaft, D-69019 Heidelberg (DE)
(72) Erfinder: Rodi, Anton, D-6906 Leimen (DE); Hauck, Dieter, D-6930 Eberbach (DE)
(74) Vertreter: Stoltenberg, Heinz-Herbert Baldo

(56) Entgegenhaltungen:
- EP-A- 0 041 406
- EP-A- 0 063 650
- GB-A- 1 100 137
- GB-A- 2 066 529
- US-A- 4 179 732
- RESEARCH DISCLOSURE, Nr. 272, Dezember 1986, Seite 745, Spalte 1, Zusammenfassung Nr. 27257, New York, US; "An efficient fault-tolerant membership protocol"

## Beschreibung

Die Erfindung betrifft eine Vorrichtung und ein Verfahren zur Sicherung von Daten, bei Einwirkungen auf ein Elektroniksystem, wie beispielsweise bei einem Serviceeinsatz oder bei einem Stromausfall etc., können die bis zur Einwirkung gespeicherten Daten verloren gehen. Handelt es sich dabei um jederzeit verfügbare Daten, die auf einem externen Datenträger abgelegt sind, so können diese Daten wieder in das System eingegeben werden, so daß der Status Quo wieder hergestellt ist. Diese Maßnahme setzt allerdings voraus, daß für einen solchen Fall ein externer Datenträger unmittelbar zur Verfügung steht, und daß das Bedienungspersonal auch das notwendige Wissen bzw. die Fertigkeit hat den Datentransfer durchzuführen.

Neben den geschilderten Voraussetzungen ist es natürlich auch erforderlich, daß die notwendige Gerätekonfiguration, wie beispielsweise Band-, Kassetten-, Diskettenlesegeräte, verfügbar sind. Nicht zuletzt muß der Hersteller des Elektroniksystems dem Anwender seine Software in genügendem Umfang zur Verfügung stellen, wodurch ein Mißbrauch nicht auszuschließen ist. Ein zusätzlicher Nachteil ist die aufzuwendende Zeit, die für einen solchen Datentransfer benötigt wird. Die oben angeführten Maßnahmen zeigen, daß zur Datensicherung ein hoher Aufwand betrieben werden muß.

Vor allem im Druckmaschinenbereich, auf den sich der vorliegende Erfindungsgegenstand schwerpunktmäßig bezieht, kann nicht erwartet werden, daß ein Drucker sich mit der Problematik des Datentransfers auseinandersetzen kann, da hierfür weiterreichende Keintnisse der Informatik notwendig sind. Auch das Servicepersonal ist vielfach überfordert, wenn Serviceleistungen aus dem Bereich der Datentechnik durchzuführen sind. Für einen solchen Servicefall müßte daher ein hochqualifizierter Servicetechniker oder speziell geschultes Personal herangezogen werden. Dies wirkt sich in nachteiliger Weise auf die Servicekosten aus. Es herrscht daher ein allgemeines Bestreben bei Serviceeinsätzen möglichst auf hochqualifizierte Servicetechniker aus Kostengründen zu verzichten.

Zur Minderung dieses hohen Aufwandes ergibt sich aus dem Stand der Technik auch die Batteriepufferung. Bei einem Netzausfall übernimmt die Batterie die Stromversorgung des Elektroniksystems, so daß kein augenblicklicher Datenverlust entstehen kann. Die Daten verbleiben in dem vorgesehen Speicherbereich, und eine Aufrechterhaltung des Systembetriebes im gleichen oder auch geringeren Umfang ist möglich. Die Funktionsdauer des Systembetriebes hängt dabei von der Dauer der Stromabgabefähigkeit der Batterie ab.

Dies kann einerseits bedeuten, daß bei einer entsprechenden Dimensionierung der Batterie ein Systembetrieb von mehreren Stunden möglich ist, andererseits kann die Dimensionierung der Batterie so ausgelegt sein, daß eine nur kurzfristige Stromabgabe gegeben ist, die gerade ausreicht, um auch die aktuellsten Daten auf einem externen Speicher zu sichern.

Bei Eingriffen in das Elektroniksystem, wie es beispielsweise bei einem Serviceeinsatz notwendig wird, versagt die zum Stand der Technik gehörende zentrale Batteriepufferung, wenn eine Systemkarte getauscht oder ersetzt werden muß. Die auf dieser Systemkarte gespeicherten Daten sind nach der durch den Austausch zwangsläufigen Stromunterbrechung verloren.

Neue, in das System einzuführende Systemkarten müßten nach dem obengenannten Stand der Technik mit den aktuellen Daten sofern sie überhaupt noch vorhanden sind versorgt werden. Dies ist ebenfalls sehr aufwendig und ermöglicht Manipulationen.

Die DE-OS 29 00 955 zeigt ein prozessorgesteuertes System, daß die zu sichernden Daten nicht in zwei nichtflüchtigen Speichern abgespeichert hat. Die DE-OS 29 00 955 lehrt ferner, daß bei einem drohenden Datenverlust nachfolgende Maßnahmen zu ergreifen sind: bei der Wiederinbetriebnahme des Systems nach einer Einwirkung auf das System werden Daten in einem Speicher mittels einer Testmaske überprüft. Bei einer Unstimmigkeit der Testmaske wird eine Urinitialisierung des Speichers vorgenommen und Daten aus einem guten nichtflüchtigen Speicher werden in den Speicher übertragen.

Anhand des aus der DE-OS 29 00 955 bekannten Verfahrens ist es nicht möglich, die, die den Systemzustand repräsentierenden Daten zu sichern, denn die aktuellsten Daten gehen bei dem aus der DE-OS 29 00 955 bekannten System bei einer Wirkung auf das System immer verloren, da sie bei ihm weder redundant noch in zwei nichtflüchtigen Speichern während des Betriebs laufend abgespeichert werden und da bei ihm aus dem guten nichtflüchtigen Speicher lediglich unveränderliche, also nicht aktuelle Daten in einen flüchtigen Speicher nachgeladen werden.

Aufgabe der Erfindung ist es deshalb, eine Vorrichtung und ein Verfahren zu schaffen, die es erlauben, Daten zu sichern ohne auf externe Datenträger mit entsprechender Gerätekonfiguration bzw. ohne auf entsprechendes Fachwissen bei der Bedienung der genannten Geräte zurückgreifen zu müssen. Ferner gehört es zur Aufgabe der Erfindung, auch die aktuellsten Daten zu sichern.

Die Aufgabe wird durch folgende Merkmale gelöst. Die Vorrichtung besteht aus mehr als einer Systemkarte, wobei eine Karte mindestens mit einem Prozessor versehen ist, die weiteren Systemkarten sind mit mindestens einem nichtflüchtigen Speicher ausgestattet. Auf jeder Systemkarte sind bestimmte Speicherplätze vorgesehen, die den jeweiligen Systemkartenzustand repräsentierende Daten enthalten. Unter nichtflüchtigen Speichern werden unter anderem auch batteriegepufferte Speicher verstanden.

Ferner wird die Aufgabe durch folgende Verfahrensmerkmale gelöst. Die den Kartenzustand repräsentierende Daten werden mittels einer Testmaske überprüft. Bei Unstimmigkeit mit der Testmaske erfolgt eine Urinitialisierung der Karte und ein Vermerk bezüglich der durchgeführten Urinitialisierung an einem bestimmten Speicherplatz. Systemkarten die nicht mit einem UrinitiaLisierungsvermerk versehen sind, werden zur Plausibilitätsprüfung der Daten herangezogen. Die Daten der geprüften und für gut befundenen Systemkarten werden auf die übrigen Systemkarten übertragen.

Der Vorteil der Erfindung ist darin zu sehen, daß ohne externe Datenträger mit der zugehörigen Gerätekonfiguration eine Datensicherung sowohl bei einem Netzausfall als auch vor allem bei einem Systemkartenwechsel gewährleistet ist.

Die redundante Anordnung der Daten auf verschiedenen Systemkarten bringt den Vorteil, daß beim Auswechseln einer Karte die weiteren Systemkarten noch die aktuellen Daten gespeichert haben. Beim Einbringen einer neuen Karte wird diese Karte von den weiteren Systemkarten mit den aktuellen Daten versorgt, ohne daß irgendwelche externen Maßnahmen für einen Datentransfer erforderlich sind. Das Elektroniksystem führt den Datenaustausch selbständig aufgrund einer mittels Software realisierten Logik aus. Dabei wird beim Einschalten des Elektroniksystems eine Prüfung der einzelnen Systemkarten hinsichtlich ihres Zustandes durchgeführt. Dazu sind bestimmte auf jeder Karte befindliche Vergleichsspeicherplätze vorgesehen, die mit einer Testmaske verglichen werden. Die Testmaske repräsentiert dabei die Sollanordnung der im Vergleichsspeicher vorgesehenen Daten. Ergibt sich eine Deckung der Testmaske mit dem Vergleichsspeicher, so ergibt sich daraus, daß die geprüfte Karte keinem Datenverlust unterlegegen ist, und daß diese geprüfte Karte als Datengeber für die weiteren Systemkarten in Frage kommt. Sollte sich bei der Prüfung der weiteren Systemkarten keine Deckung der Testmaske mit der Systemkarte ergeben, so handelt es sich jeweils um eine Karte, deren Daten nicht als gesichert angesehen werden können. Sämtliche Speicherplätze werden bei diesen Systemkarten mit einem definierten Wert (z.B. Null) überschrieben, d.h. Urinitialisiert. In einem speziellen, auf jeder Karte vorgesehenen Speicherplatz wird sodann ein Vermerk über die Urinitialisierung angebracht. Die Daten der nicht mit einem Vermerk über die Urinitialisierung versehenen Systemkarten werden hinsichtlich ihrer Plausibilität nach individuell auszuwählenden Plausibilitätskriterien überprüft. Nach der Bejahung der Plausibilität erfolgt eine Übertragung der Daten auf alle Systemkarten, die einen Urinitialisierungsvermerk haben. Da diese Vorgänge ohne externe Datenträger und ohne manuellen Eingriff ablaufen, ist in vorteilhafterweise eine Manipulierbarkeit der Daten nahezu ausgeschlossen.

Die Verhinderung der Manipulierbarkeit ist insbesondere bei Daten wichtig, die z.B. für die betriebswirtschaftlichen Belange wie auch für den Wert der Maschine von Bedeutung sind, z.B. Betriebsstundenzähler, Druckbogenzähler, Fehleranalyse, Maschinenzustände.

## Patentansprüche

1. Verfahren zur Sicherung von Daten, insbesondere bei Stromausfall oder Kartenwechsel, in einem elektronischen System, insbesondere einer Druckmaschine, wobei das System aus mehr als einer Systemkarte besteht, und wobei eine Systemkarte mindestens mit einem Prozessor versehen ist; wobei eine oder mehrere weitere Systemkarten mit mindestens einem nichtflüchtigen Speicher ausgestattet sind; und wobei auf jeder dieser weiteren Systemkarten bestimmte Speicherplätze vorgesehen sind, die den jeweiligen Systemkartenzustand repräsentierende Daten enthalten,
**gekennzeichnet durch**
folgende Merkmale:
- bei der Wiederinbetriebnahme des Systems werden die, in jedem der auf den jeweils auswechselbaren Systemkarten befindlichen, nichtflüchtigen Speicher enthaltenen, den Systemzustand repräsentierenden Daten mittels einer Testmaske überprüft,
- bei Unstimmigkeit mit der Testmaske, erfolgt eine Urinitialisierung der jeweiligen Systemkarte und ein Vermerk bezüglich der durchgeführten Urinitialisierung an einem bestimmten Speicherplatz,
- bei Systemkarten, die nicht mit einem Urinitialisierungsvermerk versehen sind, wird die Plausibilität der Daten nach ausgewählten Plausibilitätskriterien überprüft,
- die Daten der geprüften und für gut befundenen Systemkarten werden auf die übrigen Systemkarten übertragen.

2. Vorrichtung zur Durchführung des Verfahrens nach Anspruch 1, wobei
- die Vorrichtung aus mindestens zwei auswechselbaren Systemkarten besteht, die jeweils mindestens einen nichtflüchtigen Speicher zum Speichern zumindest der zu sichernden Daten enthalten und mindestens eine Systemkarte enthält, mit mindestens einem Prozessor, wobei auf die Systemkarten mit mindestens einem nichtflüchtigen Speicher bestimmte Speicherplätze vorgesehen sind, die den jeweiligen Systemkartenzustand repräsentierende Daten enthalten,
**dadurch gekennzeichnet** daß Mittel vorhanden sind wodurch:
- bei der Wiederinbetriebnahme des Systems die, in jedem der auf den jeweils auswechselbaren Systemkarten befindlichen, nichtflüchtigen Speicher enthaltenen, den Systemzustand repräsentierenden Daten mittels einer Testmaske überprüft werden,
- bei Unstimmigkeit mit der Testmaske, eine Urinitialisierung der jeweiligen Systemkarte und ein Vermerk bezüglich der durchgeführten Urinitialisierung an einem bestimmten Speicherplatz erfolgt,
- bei Systemkarten, die nicht mit einem Urinitialisierungsvermerk versehen sind, die Plausibilität der Daten nach ausgewählten Plausibilitätskriterien überprüft wird,
- die Daten der geprüften und für gut befundenen Systemkarten auf die übrigen Systemkarten übertragen werden.

## Claims

1. Method for the protection of data, in particular in the case of power failure or card exchange, in an electronic system, in particular a printing machine, the system comprising more than one system card, and a system card being provided at least with one processor; one or more further system cards being equipped with at least one nonvolatile memory; and on each of these further system cards specific memory locations being provided which contain data representing the respective system card status, characterized by the following features:
- in the event of the renewed starting up of the system, the data which represent the system status and are contained in each nonvolatile memory located on the respectively interchangeable system cards are checked by means of a test mask,
- in the case where there is no agreement with the test mask, an original initialization of the respective system card is carried out and a note relating to the original initialization carried out is made at a specific memory location,
- in the case of system cards which are not provided with an original initialization note, the plausibility of the data is checked in accordance with selected plausibility criteria,
- the data of the system cards which have been tested and found to be good are transmitted to the remaining system cards.

2. Device for carrying out the method according to Claim 1,
- the device comprising at least two interchangeable system cards, each of which contains at least one nonvolatile memory for the storage of at least the data to be protected, and containing at least one system card having at least one processor, characterized in that there are means by way of which:
- in the event of the renewed starting up of the system, the data which represent the system status and are contained in each nonvolatile memory located on the respectively interchangeable system cards are checked by means of a test mask,
- in the case where there is no agreement with the test mask, an original initialization of the respective system card is carried out and a note relating to the original initialization carried out is made at a specific memory location,
- in the case of system cards which are not provided with an original initialization note, the plausibility of the data is checked in accordance with selected plausibility criteria,
- the data of the system cards which have been tested and found to be good are transmitted to the remaining system cards.

## Revendications

1. Procédé de protection de données, en particulier en cas de panne de courant ou de remplacement de carte, sur un système électronique, en particulier une machine à imprimer, le système étant composé de plus d'une carte mère, et une carte mère étant équipée au moins d'un processeur ; une ou plusieurs autres cartes mères étant équipée(s) d'au moins une mémoire non volatile ; et sur chacune de ces autres cartes mères des positions mémoire spécifiques étant prévues qui contiennent des données représentant l'état de la carte mère respective, caractérisé par les caractéristiques suivantes :
- au moment de la remise en service du système, les données contenues dans chacune des mémoires non volatiles, qui se trouvent sur les cartes mères interchangeables respectivement, représentant l'état du système, sont testées au moyen d'un masque de test,
- en cas de désaccord avec le masque de test, une réinitialisation de la carte mère respective est effectuée et un repère concernant la réinitialisation effectuée est placé à une position mémoire spécifique,
- pour des cartes mères ne portant pas de repère de réinitialisation la vraisemblance des données est vérifiée d'après des critères de vraisemblance sélectionnés,
- les données des cartes mères testées et acceptées sont transférées sur les autres cartes mères.

2. Dispositif pour effectuer le procédé selon la revendication 1, dans lequel
- le dispositif est composé d'au moins deux cartes mères interchangeables comportant chacune au moins une mémoire non volatile pour sauvegarder au moins les données à protéger et au moins une carte mère, avec au moins un processeur, des positions mémoire spécifiques étant prévues sur les cartes mères avec au moins une mémoire non volatile, positions qui contiennent des données représentant l'état de la carte mère respective, caractérisé en ce que des moyens sont prévus par l'intermédiaire desquels :
- au moment de la remise en service du système, les données contenues dans chacune des mémoires non volatiles, qui se trouvent sur les cartes mères interchangeables respectivement, représentant l'état du système, sont testées au moyen d'un masque de test,
- en cas de désaccord avec le masque de test, une réinitialisation de la carte mère respective est effectuée et un repère concernant la réinitialisation effectuée est placé à une position mémoire spécifique,
- pour des cartes mères ne portant pas de repère de réinitialisation la vraisemblance des données est vérifiée d'après des critères de vraisemblance sélectionnés,
- les données des cartes mères testées et acceptées sont transférées sur les autres cartes mères.
